# EUROPÄISCHE PATENTSCHRIFT

(11) **EP 0 559 692 B1**
(45) Veröffentlichungstag und Bekanntmachung des Hinweises auf die Patenterteilung: **13.12.1995**
(21) Anmeldenummer: 91920368.7
(22) Anmeldetag: 27.11.1991
(51) Int. Cl.: C04B 32/00, C04B 18/02, A62D 3/00, B09B 3/00

(54) **VERFAHREN ZUM EINBINDEN VON SCHWERMETALLHALTIGEM FILTERSTAUB IN KERAMISCHE FORMLINGE**
PROCESS FOR FIXING FILTER DUST CONTAINING HEAVY METALS IN CERAMIC MOULDINGS
PROCEDE POUR L'INTEGRATION DANS DES BRIQUES CERAMIQUES DE POUDRE DE FILTRAGE CONTENANT DES METAUX LOURDS

(30) Priorität: 27.11.1990 DE 4037624; 07.10.1991 DE 4133136
(43) Veröffentlichungstag der Anmeldung: 15.09.1993
(60) Teilanmeldung: 95108630.5
(73) Patentinhaber: BETEILIGUNGSGESELLSCHAFT HARSCH GMBH UND CO. KG, D-75015 Bretten (DE); PFITZENMEIER & RAU, 75438 Knittlingen (DE)
(72) Erfinder: HARSCH, Wolfgang, D-7518 Bretten (DE); BENDER, Albert, D-7518 Bretten (DE)
(74) Vertreter: Twelmeier, Ulrich, Dipl.Phys.
(86) Internationale Anmeldenummer: EP9102241
(87) Internationale Veröffentlichungsnummer: WO9209539

(56) Entgegenhaltungen:
- EP-A- 0 168 532
- EP-A- 0 170 212
- EP-A- 0 402 746
- AT-A- 369 723
- DE-A- 3 630 697

## Beschreibung

### Technisches Gebiet

Die Erfindung geht aus von einem Verfahren zum Einbinden von schwermetallhaltigem Filterstaub in keramische Formlinge durch Mischen des Filterstaubs mit Ton, Formen von Grünlingen aus der Mischung und Hartbrennen oder Sintern der Grünlinge.

### Stand der Technik

Ein solches Verfahren ist aus der DE-OS 36 12 381 bekannt. Zweck des bekannten Verfahrens ist es, mit giftigen Schwermetallen belastete Filterstäube durch Einbinden in ein bindiges Matrixmaterial derart aufzubereiten, dass sie auf einfachen Hausmülldeponien dauerhaft abgelagert werden können. Zu diesem Zweck wird der Filterstaub mit Ton gemischt und mit einem Zusatzmaterial versetzt, welches die Kapillarität und Wasserbindungskräfte des Tons herabsetzt. Anschließend wird die Mischung zu Formkörpern einer beliebigen ablagerungsfähigen Form und Größe gepreßt. Durch das Zusatzmaterial, ein sulfoniertes, wasserlösliches Öl, soll die Wasseraufnahme der Formkörper verhindert und dadurch das Auswaschen der Schwermetalle verhindert werden. Die Formkörper können in gepreßter und luftgetrockneter Form abgelagert werden, werden jedoch vorzugsweise zur weiteren Verbesserung der physikalischen und chemischen Festigkeit zwischen 600° C und 900° C hartgebrannt oder zwischen 1100° C und 1200° C gesintert. Soweit die Formkörper lediglich gepreßt, aber nicht gebrannt oder gesintert werden, haben sie nur eine geringe Druckfestigkeit und können nur auf Deponien abgelagert, aber nicht als Baustoffe weiterverwendet werden. Ausserdem kann auf Dauer ein zu großer Schwermetallanteil ausgewaschen werden. Zu große Auswaschungsraten stellt man auch fest, wenn man die hartgebrannten bzw. gesinterten Formlinge überprüft, wobei bei den gesinterten Formlingen als weiterer Nachteil hinzukommt, dass während des Sinterns ein erheblicher Teil der Schwermetallverbindungen aus den Formkörpern ausgetrieben wird.

Aus der DE-PS 36 30 697 ist es bekannt, schwermetallhaltige Schlämme, insbesondere Galvanikschlämme, mit Ton und Flußmitteln zu vermengen und anschließend bei Temperaturen zwischen 750° C und 1150° C zu Klinkern zu brennen, deren Restporosität kleiner als 6 % ist. Die Bedingungen, unter denen man am besten arbeitet, wenn man mit schwermetallhaltigen Schlämmen Klinker bilden will, lassen sich jedoch nicht auf die Behandlung von schwermetallhaltigen Filterstäuben übertragen, welche beispielsweise in Müllverbrennungsanlagen anfallen, weil sich schwermetallhaltige Schlämme und Filterstäube in ihrer Zusammensetzung stark unterscheiden. Z.B. enthalten Schlämme in erheblichem Ausmaß organische Bestandteile, die in den Filterstäuben nahezu vollständig fehlen. Da aus wirtschaftlichen Gründen ein möglichst hoher Anteil von Schlamm bzw. Filterstaub in der tonhaltigen Mischung angestrebt wird, ist es verständlich, dass sich mit schwermetallhaltigen Schlämmen hergestellte Formlinge beim Brennen anders verhalten als mit Filterstäuben hergestellte Formlinge.

So haben Versuche, das aus der DE-PS 36 30 697 für Schlämme bekannte Verfahren in entsprechender Weise auf das Einbinden von Filterstäuben anzuwenden, gezeigt, dass Ton/Filterstaub-Mischungen erst bei vergleichsweise hohen Brenntemperaturen oberhalb von 1150°C das erforderliche Sinterverhalten zeigen, welches zu einer Fixierung der Schwermetalle in der keramischen Masse führt. Bei einer so hohen Sintertemperatur beobachtet man eine starke Neigung zum Blähen, wodurch die Porosität und mit ihr die Gefahr wächst, dass Schwermetalle aus den keramischen Formlingen ausgetrieben werden. Ausserdem hat sich gezeigt, dass beim Brennen ein großer Anteil der im Filterstaub enthaltenen Schwermetallverbindungen, insbesondere von Blei, Kupfer und Zink, ausgetrieben wird und mit dem Abgas des Brennofens ins Freie gelangt, was auf jeden Fall verhindert werden muß.

Aus der EP-A-170 212 ist es bekannt, dass man aus Ton/Filterstaubmischungen bei Brenntemperaturen zwischen 700°C und 1300°C, vorzugsweise unterhalb 800°C, ein Granulat brennen kann, in welches der Filterstaub eingebunden ist. Das Granulat hat jedoch wie Blähton ein großes Porenvolumen und zeigt zu hohe Auswaschungsraten.

### Darstellung der Erfindung

Der vorliegenden Erfindung liegt die Aufgabe zugrunde, ein Verfahren anzugeben, welches sich in besonderer Weise dazu eignet, schwermetallhaltige Filterstäube dauerhaft in keramische Formlinge einzubinden und welches beim Brennen mit einem geringeren Austreiben von Schwermetallverbindungen verknüpft ist.

Diese Aufgabe wird gelöst durch ein Verfahren mit den im Anspruch 1 angegebenen Merkmalen. Vorteilhafte Weiterbildungen der Erfindung sind Gegenstand der Unteransprüche.

Zum Einbinden von Schwermetallen aus Galvanikschlamm in keramische Formlinge eignen sich am besten siliziumreiche Tone. Mit solchen Tonen haben die Erfinder deshalb auch bei ihren ersten Versuchen zum Einbinden von Filterstäuben in keramische Formlinge gearbeitet. Dabei zeigte es sich jedoch, dass mit diesen siliziumreichen Tonen Filterstäube in der Tat nicht befriedigend eingebunden werden konnten: Cadmium und Blei wurden beim Brennen fast vollständig ausgetrieben, die flüchtigen Anteile von Kupfer und vor allem des in Filterstaub in großen Mengen vorhandenen Zink waren unannehmbar hoch. Die Erfinder haben herausgefunden, dass sich ein geringerer Schwermetallaustrieb erzielen läßt mit aluminiumreichen Tonen. Mit Tonen, die mindestens 25 Gew.-% Aluminiumoxid, vorzugsweise mehr als 30 Gew.-% Aluminiumoxid in der Trockenmasse enthalten, läßt sich das Austreiben von Schwermetallverbindungen verringern. Allerdings wird das mit einer Erhöhung der Brenntemperatur, die leider zu einem verstärkten Aufblähen führt, und mit einer Verminderung des Silikatgehaltes erkauft, der für die silikatische Einbindung der Schwermetallverbindungen in die keramische Masse und für die Beständigkeit gegen ein Auswaschen aus den Formlingen an sich wichtig ist.

Die Erfinder haben eine überraschend einfache Möglichkeit gefunden, wie man einerseits das Austreiben von Schwermetallverbindungen beim Brennen entscheidend vermindern und zugleich eine hohe Beständigkeit der keramischen Formlinge gegen ein Auswaschen der Schwermetallverbindungen erzielen kann. Um das zu erreichen, genügt es, den Filterstaub durch Waschen in alkalisch reagierendem Medium zu waschen. Das Waschen kann im einfachsten Fall mit Wasser geschehen, da Filterstaub aus Verbrennungsanlagen regelmässig Metalloxide, insbesondere CaO, enthält, welche mit Wasser Hydroxide bilden. Deshalb erhält man schon beim Waschen mit gewöhnlichem Wasser ein alkalisches Medium. Sollte die sich einstellende Alkalität im Einzelfall unzureichend sein, kann man dem durch Zugabe von gebranntem Kalk (CaO) am einfachsten abhelfen. Zwar könnte man auch NaOH oder KOH zusetzen, doch stört Ca beim Brennen weniger als Na oder K. Vorzugsweise sorgt man dafür, dass der pH-Wert mindestens den Wert pH = 9 hat.

Das Waschen des Filterstaubs hat entscheidende Vorteile: Schwermetallverbindungen, die beim Brennen in besonders starkem Ausmaß ausgetrieben wurden, insbesondere Chloride von Blei, Zink, Kupfer und Cadmium, werden in weniger stark flüchtige Verbindungen umgewandelt und fallen in dem alkalischen Medium aus. Sulfate, die einen wesentlichen Beitrag zum Blähen der Formlinge liefern, werden zu einem erheblichen Teil (größenordnungsmässig 40 %) ausgewaschen. Sie gehen zusammen mit Chlorid-, Alkali- und Erdalkali-Ionen in Lösung und sind in dem abgefilterten und durch eine Filterpresse weitgehend entwässerten Filterstaub i.w. nicht mehr enthalten, wohl aber die Schwermetallverbindungen, welche ja keramisch fixiert werden sollen.

Werden mit einem erfindungsgemäss gewaschenen Filterstaub zusammen mit Ton - und natürlich mit Wasser zum Anteigen der Mischung - Grünlinge gepreßt und gebrannt, dann ist der Schwermetallaustrieb von vornherein extrem gering, weil die früher vorhandenen leicht flüchtigen Schwermetallverbindungen in schwer flüchtige Verbindungen umgewandelt wurden. Es besteht deshalb kein Grund Al₂0₃-reiche Tone einzusetzen, vielmehr kann man - was für eine dauerhafte silikatische Fixierung der Schwermetalle günstig ist - SiO₂-reiche Tone mit 60 - 80 Gew.-% SiO₂ in der Trockenmasse einsetzen.

Ausserdem hat sich gezeigt, dass mit gewaschenem Filterstaub hergestellte Grünlinge bei **tieferer** Temperatur dicht sintern als solche, die mit ungewaschenem Filterstaub hergestellt sind, weil durch das alkalische Waschen umgewandelte und beim Brennen nicht verdampfende Bestandteile des Filterstaubes anscheinend als Flußmittel wirken. Insbesondere Blei und Eisen dürften hier eine Rolle spielen, denn ihre Hydroxide werden beim Brennen in Oxide überführt und können als Flußmittel wirken. Da beim Arbeiten mit gewaschenem Filterstaub Flußmittel während des Brennens in der Mischung entsteht, hat man auch ohne externe Flußmittelzugabe den Vorteil einer Absenkung der Sintertemperatur, darüberhinaus aber die geschilderten zusätzlichen Vorteile. Ohne dass eine gesonderte Flußmittelzugabe erfolgt, kann durch das mit gewaschenem Filterstaub arbeitende Verfahren schon bei Temperaturen unter 1100°C ein dicht gesinterter Formling gebrannt werden, der eine hervorragende Beständigkeit gegen Auswaschen von Schwermetallverbindungen zeigt. Da andererseits beim Arbeiten mit gewaschenem Filterstaub das geringe Austreiben von Schwermetallen beim Brennen und die verminderte Blähneigung keine möglichst niedrige Brenntemperatur mehr erfordern, kann man mit der Brenntemperatur bis dicht unter die Erweichungstemperatur gehen und erzielt auf diese Weise eine optimale keramische Fixierung der Schwermetalle in Verbindung mit relativ geringem Porenvolumen und hoher Druckfestigkeit der zu Klinkern gebrannten Formlinge.

Beim Mischen wird die Wasserzugabe so bemessen, dass die Mischung eine für das Formen der Grünlinge günstige Plastizität erreicht, wobei das Formen der Grünlinge am besten durch Strangpressen erfolgt. Um Grünlinge von hoher Dichte und Festigkeit zu erhalten, darf der Wasseranteil andererseits nicht zu hoch sein. Vorzugsweise wird nicht mehr als 350 g Wasser bezogen auf 1000 g der vor dem Formen der Grünlinge vorliegenden Mischung dazugegeben. Am besten stellt man die Mischung so her, dass die Grünlinge eine Stauchhöhe nach Pfefferkorn nahe 30 mm (entspricht einer Pfefferkornzahl von 1,3) erreichen.

Den Anteil des Filterstaubes an der Mischung wählt man aus wirtschaftlichen Gründen so hoch wie möglich. Es hat sich gezeigt, dass man eine hervorragende Einbindung des Filterstaubes und eine nur geringe Auswaschrate selbst unter extremen Bedingungen erreicht, wenn der Anteil des Filterstaubes an der Mischung aus Ton, Flußmittel und Filterstaub nicht mehr als 50 Gew.-% (bezogen auf Trockenmasse) beträgt; vorzugsweise beträgt der Anteil des Filterstaubs an der Mischung ein Drittel (bezogen auf Trockenmasse).

Erfindungsgemäss werden die Grünlinge bei einer Temperatur zwischen 900°C und 1100°C gebrannt. Unterhalb von 900°C laufen noch gasbildende Reaktionen ab, z.B. die Zersetzung von Calziumkarbonat in CaO und CO₂. Unterhalb von 900°C ist der aus dem Grünling gebildete Scherben noch so porös, dass die gebildeten Gase ohne Schwierigkeiten entweichen können, doch er ist zu porös für eine dauerhafte Einbindung der Schwermetalle. Oberhalb von 900°C wird der Scherben zunehmend dichter und die Einbindung der Schwermetalle fester. Mit Annäherung an 1100°C kommt es jedoch zunehmend zur Verflüchtigung von Schwermetallen, was prinzipiell unerwünscht ist und obendrein zu einem Aufblähen der Scherben führt, weil diese bereits verdichtet sind und die Schwermetalle deshalb nicht ohne weiteres entweichen können. Durch das Aufblähen werden die Scherben in Form und Festigkeit zerstört. Hiergegen hilft, dass erfindungsgemäss der Filterstaub gewaschen und ggfs. Flußmittel zugesetzt wird, weil dann beim Brennen bereits unterhalb von 1070°C - 1100°C eine Schmelzphase gebildet wird. Art und Menge des Flußmittels werden ggfs. so gewählt, dass bei der gewählten Brenntemperatur eine Schmelzphase gebildet wird, die zu einer Verglasung und damit zu einem dauerhaften Einschluß der Schwermetalle führt. Der Flußmittelgehalt sollte jedoch nicht zu hoch sein, da mit steigendem Flußmittelgehalt die Plastizität der Mischung, aus welcher die Grünlinge gebildet werden, abnimmt und der aus der Mischung gepreßte Strang bzw. die daraus geformten Grünlinge im ungetrockneten Zustand keine ausreichende Festigkeit mehr haben. Zweckmässigerweise beträgt der Flußmittelanteil weniger als 20 Gew.-% bezogen auf die Summe aus Ton, Flußmittel und Filterstaub.

In der Keramik-, Glas- und Emailleindustrie übliche Flußmittel eignen sich auch für Zwecke der vorliegenden Erfindung, insbesondere Kieselsäure, Nephelin, Syenit, Glaspulver, Borax, Flußspat oder Emaille.

Durch die Zugabe des Flußmittels wird die Temperatur, bei der das Sintern einsetzt, insbesondere aber die Erweichungstemperatur, so weit herabgesetzt, dass man unterhalb einer Brenntemperatur von 1100°C, besser noch unter 1070°C bleiben kann und doch eine Verglasung der Formlinge mit silikatischer Bindung der Schwermetalle erreicht. Durch diese Begrenzung der Brenntemperatur wird das beim Brennen zu beobachtende Austreiben von Schwermetallverbindungen spürbar vermindert. Die bei der niedrigeren Brenntemperatur noch auftretenden Schwermetallverluste können weitgehend aus dem Abgas des Brennofens herausgefiltert werden, insbesondere mit Hilfe von Molekularsieben (Zeolithe), welche sich für diesen Zweck als Rückhaltefilter besonders eignen. Sobald sie ausreichend stark beladen sind, werden sie mit Vorteil der Mischung zur Bildung weiterer Grünlinge zugesetzt und damit die aus dem Abgas herausgefilterten Schwermetallverbindungen in den Entsorgungskreislauf zurückgeführt. Die Molekularsiebe stören beim Brennvorgang nicht, sie wirken sogar in an sich erwünschter Weise als Flußmittel.

Es hat sich gezeigt, dass anstelle eines herkömmlichen Flußmittels auch Galvanikschlamm zugesetzt werden kann. Der Zusatz von Galvanikschlamm führt ebenfalls zu einem Absinken der Temperatur, bei welcher eine lokale Verglasung einsetzt. Der Zusatz von Galvanikschlamm ist deshalb besonders vorteilhaft, weil auch er Schwermetalle enthält, die dauerhaft eingebunden unschädlich gemacht werden können, so dass zwei Fliegen mit einer Klappe geschlagen werden. Als besonderer Vorteil ist darüberhinaus festzustellen, dass bei Zusatz von Galvanikschlamm insbesondere das sonst sehr problematische Zink gut eingebunden werden kann. Die Menge des Galvanikschlamms, die zugesetzt wird, sollte - berechnet als Trockenmasse - nicht größer sein als der Anteil des Filterstaubes selbst.

Vorzugsweise werden die die mit gewaschenem Filterstaub hergestellten bei einer Temperatur zwischen 1070°C und 1090°C gebrannt. Bei höheren Temperaturen kommt es zu einem Anstieg des Schwermetallaustriebs.

Ob und in welchm Ausmaß die Schwermetalle aus den gesinterten Formlingen wieder ausgewaschen werden können, hängt nicht nur von der Auswahl des Tons, des Flußmittels und der Brenntemperatur ab, sondern zu einem gewissen Teil auch von der Porosität der gesinterten Formlinge. Es wird deshalb angestrebt, die Porosität so niedrig wie möglich zu halten und die Brennbedingungen darauf einzustellen; dies gilt insbesondere für den zeitlichen Verlauf der Brenntemperatur (Brennkurve). Es wurde bereits darauf hingewiesen, dass während des Brennprozesses Gase aus dem Formling entweichen. Vorzugsweise wird eine solche Brennkurve gewählt, dass Gase wie Wasserdampf und Kohlendioxid möglichst langsam ausgetrieben werden. Damit erreicht man, dass die entweichenden Gase keine Risse und keine großen Poren im Formling erzeugen. Die anderen Temperaturbereiche sollen hingegen möglichst schnell durchfahren werden, um so schnell wie möglich den Bereich der Sintertemperatur und damit den gewünschten lokalen Schmelzfluss an den Korngrenzen zu erreichen, der zur festen Einbindung der Schwermetalle führt, bevor diese in größeren Mengen ausgasen können.

### Beispiel:

Flugasche, für welche eine chemische Analyse die folgenden Inhaltstoffe ergab (die Mengenangaben in Gew.-% beziehen sich auf die Trockenmasse):

| | | | |
|---|---|---|---|
| Cd 0,03 % | Zn 2,1 % | Na 2,2 % | wasserlösliche Anionen |
| Cr 0,04 % | Fe 3,8 % | K 4 % | Cl⁻ 13,7 % |
| Cu 0,09 % | Al 7 % | C 4,5 % | SO₄⁻⁻ 3,8 % |
| Ni 0,01 % | Ca 7,1 % | S 1,7 % | Rest: überwiegend Silizium und Sauerstoff |
| Pb 0,5 % | Mg 1,5 % | | |

wurde mit gewöhnlichem Wasser gewaschen und durch eine Filterpresse abfiltriert, wobei die abgefilterte Flugasche eine Restfeuchte von ca. 40 % hat. Sie wird anschließend mit einem siliziumreichen Ton der folgenden Zusammensetzung gemischt:

| | |
|---|---|
| SiO₂ | 74,9 % |
| Al₂O₃ | 17,7 % |
| TiO₂ | 1,3 % |
| Fe₂O₃ | 1,0 % |
| CaO | 0,2 % |
| MgO | 0,5 % |
| Na₂O | 0,1 % |
| K₂O | 4,1 % |
| Glühverlust | 3,5 % |

34 Gew.-% Flugasche und 66 Gew.-% Ton (bezogen auf Trockenmasse) werden zunächst ohne Wasserzugabe 5 Minuten lang und dann nach Wasserzugabe nochmals 5 Minuten lang durch Rühren gemischt, wobei so viel Wasser zugegeben wird, dass die Mischung 30 Gew.-% Wasser enthält.

Aus der Mischung wird mit einer Vakuum-Strangpresse unter Anwendung von 6,5 bar Preßdruck und 96 % Vakuum ein Strang mit einem Querschnitt von 33 mm x 40 mm gepreßt. Dabei wird soviel Wasser abgedrückt, dass der Strang nach dem Verpressen nur noch eine Feuchte von 26,6 % hat.

Der Strang wird in Probekörper (Grünlinge) unterteilt, die vor dem Brand 3 Tage lang bei 130° C getrocknet werden. Anschließend werden sie nach 6 Stunden Aufheizzeit bei 1080°C 3 Stunden lang gebrannt.

### Vergleichsbeispiel:

Es werden Grünlinge hergestellt und gebrannt wie im Beispiel, wobei abweichend vom Beispiel die Flugasche nicht gewaschen wurde und als Brennbedingungen eine optimale Brennkurve mit einer maximalen Temperatur von 1080° C gewählt wurde.

In dieser optimalen Brennkurve wurden die Temperaturbereiche unterhalb 900°C, in welchen eine stärkere Entgasung stattfindet, langsamer durchlaufen, bei einer im übrigen ungefähr gleich langen Gesamt-Aufheizzeit von 6 h und einer Haltezeit bei 1080°C von 3 h.

In der nachfolgenden Tabelle sind die wichtigsten Eigenschaften der gemäss dem Beispiel und dem Vergleichsbeispiel hergestellten Formlinge sowie der jeweilige Schwermetallaustrieb beim Brennen einander gegenübergestellt.

| | Vergleichsbeispiel | | Beispiel | |
|---|---|---|---|---|
| **Brennbedingungen** | | | | |
| Aufheizzeit in h | 6 (beste Brennkurve) | | 6 | |
| Haltezeit in h | 3 | | 3 | |
| max. Temperatur in °C | 1080 | | 1080 | |

| **Brennwerte** | | | | |
|---|---|---|---|---|
| Trockenschwindung in % | 1,7 | | 2,9 | |
| Brennschwindung in % | 7,8 | | 10,5 | |
| Glühverlust in % | 9,3 | | 6,6 | |
| Druckfestigkeit in N/mm² | 46,4 | | 154 | |
| Rohdichte in g/cm³ | 1,6 | | 2,1 | |
| offene Porosität in % | 32 | | 8,2 | |

| **Eluatwerte in mg/kg** | | | | |
|---|---|---|---|---|
| Cd | n.n. | | n.n. | |
| Cr | n.n. | | n.n. | |
| Cu | 0,55 ± 0,1 | | 0,23 ± 0,1 | |
| Ni | n.n. | | n.n. | |
| Pb | 2,45 ± 0,2 | | 0,19 ± 0,2 | |
| Zn | 1,07 ± 0,2 | | 1,54 ± 0,2 | |

| **Schwermetallaustrieb** | in % | in mg/kg | in % | in mg/kg |
|---|---|---|---|---|
| Cd | 67,5 | 73,7 | 10,9 | 10,7 |
| Cr | 6 | 1,8 | 0,2 | 0,3 |
| Cu | 30,4 | 137,3 | 0,6 | 2,7 |
| Ni | 3,2 | 1,4 | 0,5 | 0,2 |
| Pb | 49,5 | 1 433 | 3,5 | 79,5 |
| Zn | 41,5 | 3 257 | 0,2 | 19,3 |
| Vergleich der Produktqualitäten von Mischungen mit gewaschenem und unbehandeltem Filterstaub. n.n. = unter der Nachweisgrenze | | | | |

Die Eluatwerte wurden dadurch bestimmt, dass die Proben nach DIN 38 414 (Teil 4, DEV S4) zweimal 24 Stunden mit der zehnfachen Menge bewegtem Wasser auf einem Schütteltisch ausgelaugt wurden, wobei die Bedingungen der DIN 38 414 dadurch verschärft wurden, dass das Wasser ständig von CO₂-Gas durchströmt wurde und somit sauer gepuffert war.

### Der Vergleich zeigt:

Der Schwermetallaustrieb beim Brand der mit gewaschenem Filterstaub hergestellten Formlinge ist wesentlich geringer als bei Verwendung von ungewaschenem Filterstaub. Nur noch ein Bruchteil der bei ungewaschenem Filterstaub ausgetriebenen Schwermetallmenge wird ausgetrieben.

Bei Verwendung von gewaschenem Filterstaub entstehen bereits bei der relativ niedrigen Brenntemperatur von 1080°C durchgesinterte Formlinge mit hoher Druckfestigkeit, die eine Verwendung als Baustoff erlaubt.

Die Rohdichte nimmt bei Verwendung von gewaschenem Filterstaub stark zu und die offene Porosität, die mit der Eluierbarkeit verknüpft ist, nimmt stark ab. Was die Zahlenwerte der Eluierbarkeit betrifft, muss berücksichtigt werden, dass der Schwermetallgehalt der Formlinge, die mit gewaschenem Filterstaub hergestellt werden, wegen des fehlenden Austriebs größer ist als bei den mit ungewaschenem Filterstaub hergestellten Formlingen.

Analysen der Waschflüssigkeit haben ergeben, dass diese zwar ca. 40 % des Chlorid- und Sulfatanteiles, dazu Alkalien und Erdalkalien aufgenommen hat, insbesondere Calzium, was für den Brennprozeß von Vorteil ist, dass die Waschflüssigkeit aber nur vernachlässigbare Mengen an Schwermetallen enthält, was ebenfalls von Vorteil ist, da die Schwermetalle ja keramisch gebunden werden sollen.

Ergänzende Untersuchungen zur Optimierung der Brennbedingungen haben gezeigt, dass bei den gewählten Zusammensetzungen die ausgetriebenen Schwermetallmengen bei einer Brenntemperatur von 1080° C ein Minimum haben und bei einer Erhöhung der Temperatur insbesondere Zink verstärkt ausgetrieben wird. Überraschenderweise hat sich gezeigt, dass auch die Eluierbarkeit der Schwermetalle Cd, Zn, Pb, Ni, Cu, Cr ein Minimum aufweist wenn die Brenntemperatur zu 1070° C bis 1080° C gewählt wird.

Ferner hat sich herausgestellt, dass die ausgetriebenen Schwermetallmengen mit kürzerer Aufheizzeit kleiner werden und dass die Eluierbarkeit der Schwermetalle aus den Formlingen ein Minimum hat, wenn die Aufheizzeit zwischen 3 und 4 Stunden gewählt wird.

Bei Verwendung des in dem Beispiel verwendeten siliziumreichen Tones liegen optimale Brennbedingungen deshalb bei einer Aufheizzeit von 3 bis 4 Stunden, einer maximalen Temperatur von 1070° C bis 1080° C und einer Haltezeit von 2 bis 3 Stunden.

Die Eluierbarkeit ist bei Tonen mit 60 bis 80 % SiO₂-Gehalt und mit Al₂O₃-Gehalten knapp unter 20 % am geringsten, so dass solche Tone bevorzugt werden.

## Patentansprüche

1. Verfahren zum Einbinden von schwermetallhaltigem Filterstaub in keramische Formlinge durch
Waschen des Filterstaubs in alkalisch reagierendem Medium,
Mischen des gewaschenen Filterstaubs mit Ton und Wasser,
Formen von Grünlingen aus der Mischung,
Brennen der Grünlinge bei einer Temperatur zwischen 900°C und 1100° C,
wobei die Brenntemperatur unterhalb des Erweichungspunktes so gewählt wird, dass eine Schmelzphase gebildet wird, die zu einer Verglasung und damit zu einem dauerhaften Einschluß der Schwermetalle bzw. ihrer Verbindungen im Formling führt.

2. Verfahren nach Anspruch 1, **dadurch gekennzeichnet**, dass der Filterstaub in einem Medium mit einem pH ≧ 9 gewaschen wird.

3. Verfahren nach Anspruch 1 oder 2, **dadurch gekennzeichnet**, dass zur Erhöhung der Alkalität dem Medium CaO zugegeben wird.

4. Verfahren nach Anspruch 1, **dadurch gekennzeichnet**, dass der gewaschene Filterstaub abgefiltert, mit Hilfe einer Filterpresse entwässert und dann mit dem Ton gemischt wird.

5. Verfahren nach einem der Ansprüche 1 bis 4, **dadurch gekennzeichnet**, dass beim Mischen zusätzlich ein oder mehrere Flußmittel hinzugefügt werden.

6. Verfahren nach einem der Ansprüche 1 bis 4, **dadurch gekennzeichnet**, dass die Formlinge bei 1070° C bis 1090° C gebrannt werden.

7. Verfahren nach Anspruch 5, **dadurch gekennzeichnet**, dass die Grünlinge bei einer Temperatur zwischen 950° C und 1020° C gebrannt werden.

8. Verfahren nach einem der vorstehenden Ansprüche, **dadurch gekennzeichnet**, dass bis zu 350 g Wasser bezogen auf 1000 g Trockensubstanz der vor dem Formen der Grünlinge vorliegenden Mischung dazugegeben werden.

9. Verfahren nach einem der vorstehenden Ansprüche, **dadurch gekennzeichnet**, dass maximal 50 Gew.-% Filterstaub (Trockensubstanz) bezogen auf die Summe aus Ton, Flußmittel und Filterstaub zugesetzt werden.

10. Verfahren nach einem der vorstehenden Ansprüche, **dadurch gekennzeichnet**, dass nicht mehr als 20 Gew.-% Flußmittel bezogen auf die Summe aus Ton, Flußmittel und Filterstaub (Trockensubstanz) zugesetzt werden.

11. Verfahren nach einem der vorstehenden Ansprüche, **dadurch gekennzeichnet**, dass als Flußmittel Kieselsäure, Nephelin, Syenit, Glaspulver, Borax, Flußspat oder Emaille zugesetzt wird.

12. Verfahren nach einem der Ansprüche 1 bis 11, **dadurch gekennzeichnet**, dass als Flußmittel Galvanikschlamm zugesetzt wird.

13. Verfahren nach Anspruch 12, **dadurch gekennzeichnet**, dass der Anteil des Galvanikschlamms, berechnet als Trockenmasse, höchstens so groß wie der Anteil des Filterstaubes ist.

14. Verfahren nach einem der vorstehenden Ansprüche, **dadurch gekennzeichnet**, dass die Grünlinge unter teilweiser Entwässerung der Mischung durch Extrudieren geformt, anschließend durch Erwärmen auf eine Temperatur von nicht mehr als 150° C mindestens 1 Tag lang getrocknet und erst danach gebrannt werden.

15. Verfahren nach Anspruch 14, **dadurch gekennzeichnet**, dass die Grünlinge mit einem Preßdruck von mindestens 5 bar extrudiert werden.

16. Verfahren nach Anspruch 14 oder 15, **dadurch gekennzeichnet**, dass die Grünlinge 3 Tage lang bei 130° C getrocknet werden.

17. Verfahren nach einem der vorstehenden Ansprüche, **dadurch gekennzeichnet**, dass beim Brennen ausgetriebene Schwermetallverbindungen aus dem Abgasstrom herausgefiltert und zur Zubereitung einer Mischung für weitere Grünlinge verwendet werden.

18. Verfahren nach Anspruch 17, **dadurch gekennzeichnet**, dass die Schwermetallverbindungen mit Molekularsieben herausgefiltert werden und die beladenen Molekularsiebe zur Zubereitung der Mischung für weitere Grünlinge verwendet werden.

19. Verfahren nach einem der vorstehenden Ansprüche, **dadurch gekennzeichnet**, dass die Grünlinge bei einer knapp unterhalb des Erweichungspunktes liegenden Temperatur gebrannt werden.

20. Verfahren nach einem der vorstehenden Ansprüche, **dadurch gekennzeichnet**, dass beim Brennen Temperaturbereiche unterhalb von 900° C, soweit in denen wesentliche Mengen von Wasserdampf und Kohlendioxid ausgetrieben werden, langsamer durchfahren werden als Temperaturbereiche in denen unwesentliche Gasmengen Schwermetalle oder Schwermetallverbindungen ausgetrieben werden.

21. Verfahren nach Anspruch 1, **dadurch gekennzeichnet**, dass ein Ton verwendet wird, der höchstens 25 Gew.-% Al₂O₃ und 60 bis 80 Gew.-% SiO₂ in der Trockenmasse enthält.

## Claims

1. Process for integrating heavy metal-containing filter dust into formed ceramic bodies by
washing the filter dust in a medium which is alkaline in reaction,
mixing the washed filter dust with clay and water,
forming green bodies from the mixture,
firing the green bodies at a temperature between 900°C and 1100°C,
with the selected firing temperature being below the softening point such that a melt phase is formed which results in vitrification and thus to lasting containment of the heavy metals or the compounds thereof in the formed body.

2. Process according to Claim 1, characterised in that the filter dust is washed in a medium having a pH of ≧ 9.

3. Process according to Claim 1 or 2, characterised in that CaO is added to the medium in order to increase alkalinity.

4. Process according to Claim 1, characterised in that the washed filter dust is filtered off, is dewatered with the aid of a filter press and is then mixed with the clay.

5. Process according to one of Claims 1 to 4, characterised in that one or more fluxing agents are also added during mixing.

6. Process according to one of Claims 1 to 4, characterised in that the formed bodies are fired at from 1070°C to 1090°C.

7. Process according to Claim 5, characterised in that the green bodies are fired at a temperature between 950°C and 1020°C.

8. Process according to one of the preceding claims, characterised in that up to 350 g water are added per 1000 g dry substance of the mixture which is present before formation of the green bodies.

9. Process according to one of the preceding claims, characterised in that a maximum of 50 wt-% filter dust (dry substance) is added, calculated on the total of clay, fluxing agent(s) and filter dust.

10. Process according to one of the preceding claims, characterised in that not more than 20 wt-% fluxing agent(s) are added, calculated on the total of clay, fluxing agent(s) and filter dust (dry substance).

11. Process according to one of the preceding claims, characterised in that silica, nepheline, syenite, powdered glass, borax, fluorspar or enamel are added as the fluxing agent(s).

12. Process according to one of Claims 1 to 11, characterised in that galvanic sludge is added as a fluxing agent.

13. Process according to Claim 12, characterised in that the maximum proportion of galvanic sludge, calculated as dry weight, is as great as the proportion of filter dust.

14. Process according to one of the preceding claims, characterised in that the green bodies are formed by extrusion with partial dewatering of the mixture, are then dried by heating to a temperature of not more than 150°C for at least 1 day, and are fired only thereafter.

15. Process according to Claim 14, characterised in that the green bodies are extruded at a pressure of at least 5 bar.

16. Process according to Claim 14 or 15, characterised in that the green bodies are dried at 130°C for 3 days.

17. Process according to one of the preceding claims, characterised in that heavy metal compounds expelled during firing are filtered out of the exhaust gas stream and are used in the preparation of a mixture for further green bodies.

18. Process according to Claim 17, characterised in that the heavy metal compounds are filtered out with molecular sieves, and the charged molecular sieves are used in the preparation of the mixture for further green bodies.

19. Process according to one of the preceding claims, characterised in that the green bodies are fired at a temperature just below the softening point.

20. Process according to one of the preceding claims, characterized in that, during firing, temperature regions below 900°C during which substantial quantities of water vapour and carbon dioxide are expelled are passed through more slowly than temperature regions during which insubstantial gas quantities of heavy metals or heavy metal compounds are expelled.

21. Process according to Claim 1, characterized in that a clay which contains at most 25 wt.-% Al₂O₃ and 60 to 80 wt.-% SiO₂ in the dry substance is used.

## Revendications

1. Procédé d'incorporation dans des briques céramiques de poudre de filtrage contenant des métaux lourds, par
lavage de la poudre de filtrage dans un milieu réagissant de manière alcaline,
mélange de la poudre de filtrage lavée avec de l'argile et de l'eau,
mise en forme de pièces à vert à partir du mélange,
cuisson des pièces à vert à une température entre 900°C et 1100°C,
la température de cuisson étant choisie inférieure au point de ramollissement de telle manière qu'une phase fondue est formée, qui conduit à une vitrification et ainsi à une incorporation durable des métaux lourds ou de leurs composés dans les briques.

2. Procédé selon la revendication 1, caractérisé en ce que la poudre de filtrage est lavée dans un milieu à pH ≧ 9.

3. Procédé selon la revendication 1 ou 2, caractérisé en ce que, pour augmenter l'alcalinité du milieu, on ajoute du CaO.

4. Procédé selon la revendication 1, caractérisé en ce que la poudre de filtrage lavée est filtrée, déshydratée au moyen d'une presse filtrante, puis mélangée à l'argile.

5. Procédé selon l'une des revendications 1 à 4, caractérisé en ce que, lors du mélange, un ou plusieurs fluidifiants sont de plus ajoutés.

6. Procédé selon l'une des revendications 1 à 4, caractérisé en ce que les briques sont cuites entre 1070°C et 1090°C.

7. Procédé selon la revendication 5, caractérisé en ce que les pièces à vert sont cuites à une température entre 950°C et 1020°C.

8. Procédé selon l'une des revendications précédentes, caractérisé en ce que jusqu'à 350 g d'eau sont ajoutés pour 1000 g de substance sèche du mélange présent avant mise en forme des pièces à vert.

9. Procédé selon l'une des revendications précédentes, caractérisé en ce qu'au plus 50 % en poids de poudre de filtrage (substance sèche) sont ajoutés par rapport à la somme de l'argile, du fluidifiant et de la poussière de filtrage.

10. Procédé selon l'une des revendications précédentes, caractérisé en ce que pas plus de 20 % en poids de fluidifiant ne sont ajoutés par rapport à la somme de l'argile, du fluidifiant et de la poussière de filtrage (substance sèche).

11. Procédé selon l'une des revendications précédentes, caractérisé en ce que, comme fluidifiant, on ajoute de l'acide silicique, de la népheline, de la syénite, de la poudre de verre, du borax, de la fluorine ou de l'émail.

12. Procédé selon l'une des revendications 1 à 11, caractérisé en ce que, comme fluidifiant, on ajoute de la boue de galvanisation.

13. Procédé selon la revendication 12, caractérisé en ce que la part de la boue de galvanisation, comptée comme masse sèche, est au plus aussi grande que la part de la poudre de filtrage.

14. Procédé selon l'une des revendications précédentes, caractérisé en ce que les pièces à vert sont formées par extrusion avec déshydratation partielle du mélange, puis sont séchées par chauffage à une température de pas plus de 150°C pendant au moins 1 jour, et ne sont cuite qu'après cela.

15. Procédé selon la revendication 14, caractérisé en ce que les pièces à vert sont extrudées avec une pression d'au moins 5 bar.

16. Procédé selon la revendication 14 ou 15, caractérisé en ce que les pièces à vert sont séchées pendant trois jours à 130°C.

17. Procédé selon l'une des revendications précédentes, caractérisé en ce que les composés de métaux lourds évacués lors de la cuisson sont extraits par filtration du courant de gaz d'échappement et sont utilisés pour la préparation d'un mélange pour d'autres pièces à vert.

18. Procédé selon la revendication 17, caractérisé en ce que les composés de métaux lourds sont extraits par filtration avec des tamis moléculaires et les tamis moléculaires chargés sont utilisés pour la préparation d'un mélange pour d'autres pièces à vert.

19. Procédé selon l'une des revendications précédentes, caractérisé en ce que les pièces à vert sont cuites à une température juste inférieure au point de ramollissement.

20. Procédé selon l'une des revendications précédentes, caractérisé en ce que, lors de la cuisson, les domaines de température inférieurs à 900°C, des quantités considérables de vapeur d'eau et de dioxyde de carbone étant dégagées dans ceux-ci, sont traversés plus lentement que les domaines de température dans lesquels des quantités négligeables de gaz, de métaux lourds ou de composés de métaux lourds sont dégagées.

21. Procédé selon la revendication 1, caractérisé en ce qu'on utilise une argile qui contient au plus 25 % en poids d'Al₂O₃ et 60 à 80 % en poids de SiO₂ dans la masse sèche.
